# EUROPÄISCHE PATENTANMELDUNG

(11) **EP 2 894 313 A1**
(43) Veröffentlichungstag der Anmeldung: **15.07.2015**
(21) Anmeldenummer: 15000442.2
(22) Anmeldetag: 29.06.2012
(51) Int. Cl.: F02B 19/10, F02B 19/12, F02B 19/18, F02M 21/02, F02B 19/08

(54) **Vorkammersystem für eine Brennkraftmaschine**

(30) Priorität: 28.12.2011 AT 18982011
(62) Teilanmeldung aus: 12740036.4
(71) Anmelder: GE Jenbacher GmbH & Co OG, 6200 Jenbach (AT)
(72) Erfinder: Dumser, Frederic, 6020 Innsbruck (AT); Becker, Florian, 6212 Maurach a.A. (AT)
(74) Vertreter: Gangl, Markus

(57) **Zusammenfassung**

Vorkammersystem (1) für eine Brennkraftmaschine, mit:
- einer eine Wandung (3) aufweisenden Vorkammer (2),
- einer wenigstens eine Elektrode (13) aufweisenden Zündkerze (4),
- einer Gaseinbringungseinrichtung (5), insbesondere ein Gasventil,
- einem die Gaseinbringungseinrichtung (5) mit der Vorkammer (2) über eine Einmündungsöffnung (6) verbindenden Gaskanal (7),
- einem Steigkanal (8) zum Verbinden der Vorkammer (2) mit einem Brennraum der Brennkraftmaschine,
- einer Leiteinrichtung (9) zur Beeinflussung der Strömung des Gases in der Vorkammer (2), wobei die Leiteinrichtung (9) benachbart zur Einmündungsöffnung (6) derart angeordnet ist, dass im Betrieb durch die Leiteinrichtung (9) eine Reduktion des an die Elektrode (13) der Zündkerze 4 gelangenden Volumenstromes heißen Gases erfolgt, welches über den Steigkanal (8) in die Vorkammer (2) einströmt,
wobei sich die Leiteinrichtung (9) zwischen der Einmündungsöffnung (6) des Gaskanals (7) und dem Steigkanal (8) befindet, und eine die Einmündungsöffnung (6) und den Steigkanal (8) verbindende Durchgangsöffnung (12) aufweist.

## Beschreibung

Die vorliegende Erfindung betrifft ein Vorkammersystem für eine Brennkraftmaschine mit den Merkmalen des Oberbegriffs des Anspruchs 1 sowie eine Brennkraftmaschine, insbesondere einen Gas-Otto-Motor, mit einem solchen Vorkammersystem.

In Brennkraftmaschinen ab einer bestimmten Baugröße kommen gasgespülte Vorkammersysteme zum Einsatz, deren Aufgabe es ist, einen Brennraum der Brennkraftmaschine so zu entflammen, dass eine ideale Verbrennung erreicht wird. Dabei wird der Vorkammer während des Ansaugtaktes der Brennkraftmaschine über eine Gaseinbringungseinrichtung eine bestimmte Gasmenge zugegeben.

Gleichzeitig wird ein überstöchiometrisches Gas-Luft-Gemisch dem Brennraum zugeführt. Über eine kommunizierende Übertrittsöffnung (Steigkanal) strömt während des Verdichtungstakts das überstöchiometrische Gemisch in die Vorkammer und vermengt sich dort mit dem reinen Gas zu einem in etwa stöchiometrischem Gemisch (λ□=1).

Nach der Durchmischung des Gas-Luft-Gemisches mit reinem Gas bleiben allerdings lokale Bereiche zurück, in denen sich das reine Gas nur sehr wenig mit dem überstöchiometrischen Gas-Luft-Gemisch vermengt hat. Das teilweise homogenisierte Gemisch wird über eine Zündkerze entflammt. Das verbrannte heiße Gas strömt aufgrund einer Drucküberhöhung über die kommunizierende Übertrittsöffnung (Steigkanal) in den Brennraum der Brennkraftmaschine und bringt diesen zur Entflammung.

Nachteilig an derartigen Systemen ist einerseits eine Neigung zur Rußentstehung in den sogenannten Schadvolumina, das sind jene Volumina, in welchen die Durchmischung nur unzureichend erfolgt, und andererseits eine starke thermische Beanspruchung der Elektroden der Zündkerze durch heiße Verbrennungsgase.

Vorkammersysteme mit Leiteinrichtungen sind aus dem Stand der Technik bekannt und dienen unterschiedlichen Zwecken (siehe zum Beispiel US 4,467,759, US 5,947,076 oder US 4,095,565).

Aufgabe der Erfindung ist es, ein gegenüber dem Stand der Technik verbessertes Vorkammersystem anzugeben.

Diese Aufgabe wird durch ein Vorkammersystem mit den Merkmalen des Anspruchs 1 bzw. eine Brennkraftmaschine mit einem derartigen Vorkammersystem gelöst.

Vorteilhafte Ausführungsformen der Erfindung sind in den abhängigen Ansprüchen definiert.

Die Anordnung der Leiteinrichtung benachbart zur Einmündungsöffnung für den gasförmigen Brennstoff derart, dass sich die Leiteinrichtung zwischen der Einmündungsöffnung des Gaskanals und dem Steigkanal befindet, und eine die Einmündungsöffnung und den Steigkanal verbindende Durchgangsöffnung aufweist, sodass im Betrieb durch die Leiteinrichtung im Bereich der Elektrode der Zündkerze eine Reduktion des Volumenstromes von über den Steigkanal in die Vorkammer gelangenden heißen Gases erfolgt, bewirkt eine Verlängerung der Lebensdauer der Zündkerze, da so der Wärmeeintrag auf die Elektrode der Zündkerze abnimmt und eine kühlere Elektrode eine verlängerte mittlere Zündkerzenlebensdauer zur Folge hat.

Außerdem wird eine erhöhte Rußbildung verhindert.

So kann auch ohne eine Bohrung in der Wandung der Vorkammer sichergestellt werden, dass kühles Frischgas aus dem Gaskanal über die Elektrode der Zündkerze streicht. In diesem Fall sollte aber die Leiteinrichtung eine Durchgangsöffnung aufweisen, welche die Einmündungsöffnung des Gaskanals und den Steigkanal verbindet. So wird sichergestellt, dass aus dem Gaskanal austretendes Frischgas ungehindert in die Vorkammer einströmen kann. Durch eine Ausrichtung der Durchgangsöffnung zum Gaskanal hin kann während der Verdichtungsphase vor der Verbrennung ein Einströmen des mageren Gas-Luft-Gemisches in das Schadvolumen vor und im Gaskanal unterstützt werden, was zu einer besseren Homogenisierung mit Frischgas führt und so Rußentstehung im Schadvolumen reduziert.

Grundsätzlich kann vorgesehen sein, dass die Leiteinrichtung einstückig mit der Wandung der Vorkammer ausgebildet ist.

Es kann aber auch vorgesehen sein, dass die Leiteinrichtung an der Wandung der Vorkammer befestigt ist. Zu diesem Zweck kann die Leiteinrichtung einen ringförmigen Abschnitt aufweisen, über welchen sie an der Wandung der Vorkammer befestigt, zum Beispiel eingepresst oder eingelegt ist.

Bei der erfindungsgemäßen Brennkraftmaschine handelt es sich insbesondere um eine stationäre Brennkraftmaschine, vorzugsweise einen - insbesondere stationären - Gas-Otto-Motor.

Weitere Vorteile und Einzelheiten der Erfindung ergeben sich anhand der Figuren sowie der dazugehörigen Figurenbeschreibung. Dabei zeigen:
- Fig.1: eine perspektivische Schnittdarstellung durch ein Vorkammersystem,
- Fig.2a bis 2c: drei Ausführungsbeispiele, wobei die Variante der Figur 2a jener der Figur 1 entspricht,
- Fig. 3a und 3b: Darstellungen der Strömungsverhältnisse in einem erfindungsgemäßen Vorkammersystem anhand des Ausführungsbeispiels der Figur 2c und
- Fig. 4: eine perspektivische Ansicht eines Details der Figur 2b.

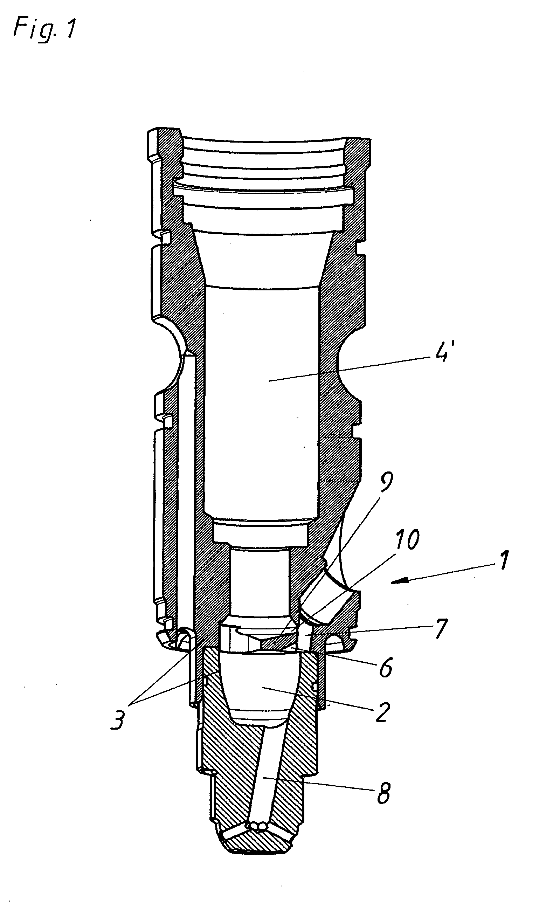

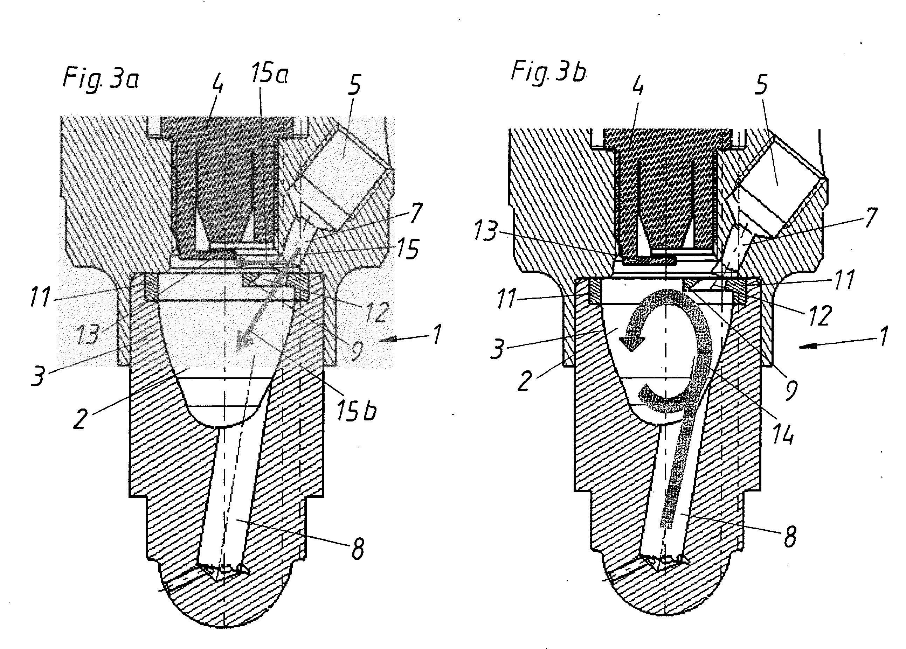

In Figur 1 ist ein erstes Ausführungsbeispiel eines (nicht erfindungsgemäßen) Vorkammersystems 1 gezeigt. Die Vorkammer 2 wird dabei durch eine Wandung 3 gebildet und ist über einen Steigkanal 8 mit einem nicht dargestellten Brennraum einer Brennkraftmaschine verbindbar bzw. im Montagezustand verbunden. Der Steigkanal 8 mündet asymmetrisch in die Vorkammer 2 ein, wodurch sichergestellt wird, dass sich eine sogenannte Tumble-Strömung 14 ausbildet (siehe Figur 3b).

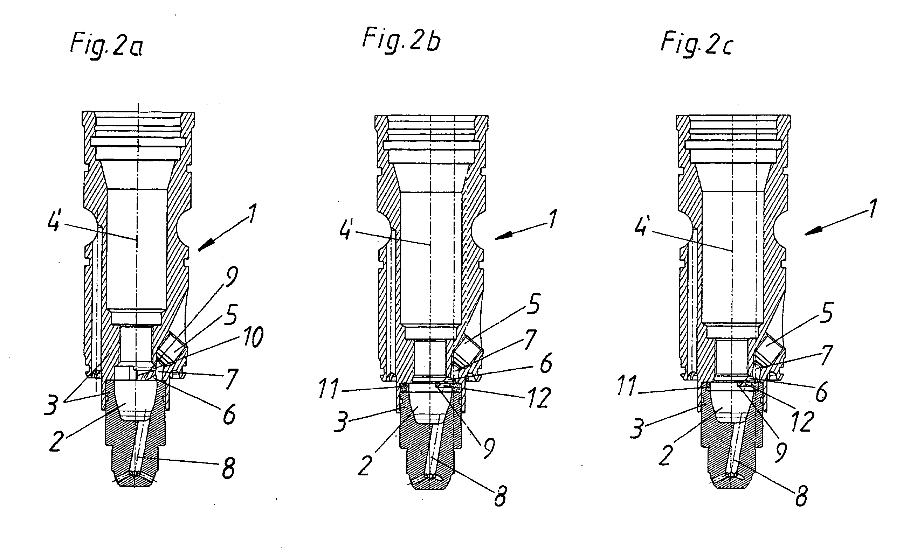

In Schacht 4' kann eine in Figur 1 nicht dargestellte Zündkerze 4 (siehe aber die Figur 3) in das Vorkammersystem 1 eingesetzt werden. Ein Gaskanal 7 verbindet eine in Figur 1 nicht dargestellte Einbringungseinrichtung 5 (siehe aber Figur 2a) über eine Einmündungsöffnung 6 mit der Vorkammer 2. Im Vorkammersystem 1 ist benachbart zur Einmündungsöffnung 6 eine Leiteinrichtung 9 angeordnet. Oberhalb der Leiteinrichtung 9 ist eine Bohrung 10 in der Wandung 3 der Vorkammer 2 angeordnet, welche eine Verbindung zum Gaskanal 7 herstellt.

Die Bohrung 10 stellt sicher, dass Frischgas aus dem Gaskanal 7 in den Bereich oberhalb der Leiteinrichtung 9 eindringen kann und durch die Leiteinrichtung 9 zu der in Figur 1 nicht dargestellten Elektrode 13 (siehe Figur 3) der Zündkerze 4 gelangt, um diese aktiv zu kühlen.

In der Figur 2a ist noch einmal das Vorkammersystem 1 der Figur 1 dargestellt, wobei hier aber die Gaseinbringungseinrichtung 5 in Form eines Gasventils erkennbar ist.

In der Variante (erfindungsgemäß) nach Figur 2b ist die Leiteinrichtung 9 nicht einstückig mit der Wandung 3 der Vorkammer 2 ausgebildet, so wie dies in den Figuren 1 und 2a der Fall ist. In diesem Ausführungsbeispiel (und auch im Ausführungsbeispiel der Figur 2c) ist die Leiteinrichtung 9 an der Wandung 3 der Vorkammer 2 befestigt. Zu diesem Zweck weist die Leiteinrichtung 9 einen ringförmigen Abschnitt 11 auf, über welchen sie an der Wandung 3 der Vorkammer geklemmt (Variante der Figur 2b) bzw. eingepresst (Variante der Figur 2c) ist.

Ein weiterer Unterschied zwischen den erfindungsgemäßen Varianten der Figuren 2b und 2c und jener der Figuren 1 und 2a besteht darin, dass in den Varianten der Figuren 2b und 2c die Leiteinrichtung 9 zwischen der Einmündungsöffnung 6 des Gaskanals 7 und dem Steigkanal 8 angeordnet ist. So kann die in Figur 1 und 2a dargestellte zusätzliche Bohrung 10 entfallen. Um aber sicherzustellen, dass genügend Frischgas in die Vorkammer 2 einströmen kann, ist die Leiteinrichtung 9 mit einer Durchgangsöffnung 12 versehen. Die sich so ergebenden Strömungsverhältnisse in Bezug auf das Frischgas sind in Figur 3a bezüglich der Variante der Figur 2c dargestellt. Die Strömung 15 von über die Gaseinbringungseinrichtung 5 in den Gaskanal 7 eingebrachten Frischgas zeigt sich in einer Teilströmung 15a auf, welche über die Elektrode 13 der Zündkerze 4 strömt und in eine Teilströmung 15b, welche durch die Durchgangsöffnung 12 in die Vorkammer 2 einströmt.

Zu beachten ist, dass in der Figur 3a die Spülphase und in der Figur 3b die Kompressionsphase (Verdichtungstakt) der Brennkraftmaschine dargestellt ist.

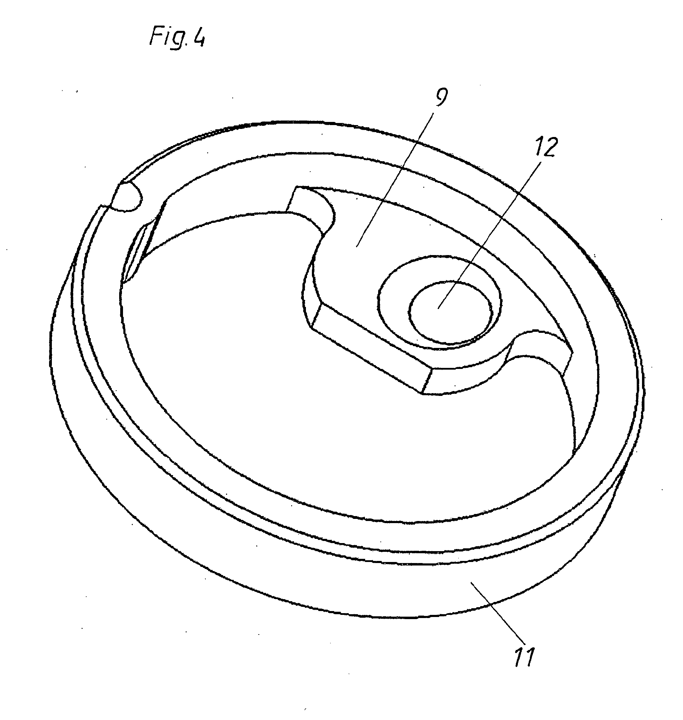

Figur 4 zeigt eine perspektivische Ansicht des ringförmigen Abschnitts 11 samt Leiteinrichtung 9 für jene Ausführungsbeispiele, wo die Leiteinrichtung 9 an der Wandung 3 der Vorkammer 2 befestigt und nicht einstückig mit der Vorkammer 2 ausgebildet ist.

## Patentansprüche

1. Vorkammersystem (1) für eine Brennkraftmaschine, mit:
- einer eine Wandung (3) aufweisenden Vorkammer (2),
- einer wenigstens eine Elektrode (13) aufweisenden Zündkerze (4),
- einer Gaseinbringungseinrichtung (5), insbesondere ein Gasventil,
- einem die Gaseinbringungseinrichtung (5) mit der Vorkammer (2) über eine Einmündungsöffnung (6) verbindenden Gaskanal (7),
- einem Steigkanal (8) zum Verbinden der Vorkammer (2) mit einem Brennraum der Brennkraftmaschine,
- einer Leiteinrichtung (9) zur Beeinflussung der Strömung des Gases in der Vorkammer (2), wobei die Leiteinrichtung (9) benachbart zur Einmündungsöffnung (6) derart angeordnet ist, dass im Betrieb durch die Leiteinrichtung (9) eine Reduktion des an die Elektrode (13) der Zündkerze 4 gelangenden Volumenstromes heißen Gases erfolgt, welches über den Steigkanal (8) in die Vorkammer (2) einströmt,
**dadurch gekennzeichnet, dass** sich die Leiteinrichtung (9) zwischen der Einmündungsöffnung (6) des Gaskanals (7) und dem Steigkanal (8) befindet, und eine die Einmündungsöffnung (6) und den Steigkanal (8) verbindende Durchgangsöffnung (12) aufweist.

2. Vorkammersystem nach Anspruch 1, **dadurch gekennzeichnet, dass** die Leiteinrichtung (9) benachbart zur Einmündungsöffnung (6) angeordnet ist.

3. Vorkammersystem nach einem der Ansprüche 1 bis 2, **dadurch gekennzeichnet, dass** die Leiteinrichtung (9) als etwa rechtwinklig zur Vorkammerachse in die Vorkammer (2) hinein ragender Vorsprung ausgebildet ist.

4. Vorkammersystem nach einem der Ansprüche 1 bis 3, **dadurch gekennzeichnet, dass** die Leiteinrichtung (9) einstückig mit der Wandung (3) der Vorkammer (2) ausgebildet ist.

5. Vorkammersystem nach einem der Ansprüche 1 bis 4, **dadurch gekennzeichnet, dass** die Leiteinrichtung (9) an der Wandung (3) der Vorkammer (2) befestigt ist.

6. Vorkammersystem nach Anspruch 5, **dadurch gekennzeichnet, dass** die Leiteinrichtung (9) einen ringförmigen Abschnitt (11) aufweist, über welchen sie an der Wandung (3) der Vorkammer (2) befestigt - vorzugsweise eingepresst oder eingelegt - ist.

7. Vorkammersystem nach einem der Ansprüche 1 bis 6, **dadurch gekennzeichnet, dass** der Gaskanal (7) zumindest bereichsweise in der Nähe der Wandung (3) der Vorkammer (2) verläuft und sich die Leiteinrichtung (9) in Höhe des Gaskanals (7) in die Vorkammer (2) hinein erstreckt.

8. Brennkraftmaschine mit einem Vorkammersystem (1) nach einem der Ansprüche 1 bis 7, wobei der Steigkanal (8) des Vorkammersystems (1) mit einem Brennraum der Brennkraftmaschine verbunden ist.
